# EUROPÄISCHE PATENTANMELDUNG

(11) **EP 1 650 005 A2**
(43) Veröffentlichungstag der Anmeldung: **26.04.2006**
(21) Anmeldenummer: 05022554.9
(22) Anmeldetag: 17.10.2005
(51) Int. Cl.: B29C 47/04

(54) **Strangförmiges flexibles Profil und Verfahren zu seiner Herstellung**

(30) Priorität: 21.10.2004 DE 102004051510; 21.10.2004 DE 102004051511
(71) Anmelder: Troester GmbH & Co.KG, D-30519 Hannover (DE)
(72) Erfinder: Pielsticker, Bernd, 31157 Sarstedt (DE); Reineke, Frank, 30952 Ronnenberg (DE)
(74) Vertreter: Scheffler, Jörg

(57) **Zusammenfassung**

Die Erfindung betrifft ein strangförmiges flexibles Profil, das im Extrusionsverfahren aus mindestens zwei verschiedenen extrudierbaren Kunststoffen hergestellt ist und ein hierzu geeignetes Herstellungsverfahren. In der Technik gibt es vielfach die Forderung, strangförmige Gegenstände druck- und verformungsfest zu gestalten, aber doch die Möglichkeit zu haben, sie flexibel biegen zu können. Das sind Eigenschaften, die einander widersprechen. Daher sind bei solchen Gegenständen Kompromisse einzugehen. Es ist die Aufgabe der Erfindung, strangförmig durch Kunststoffextrusion herzustellende Gegenstände druck- und verformungsfest und doch auch flexibel zu gestalten. Die Erfindung besteht darin, dass das strangförmige Profil aus zwei verschiedenen Kunststoffen aufgebaut ist, die in Längsrichtung das Stranges wechselnd hintereinander angeordnet sind und von denen der eine Kunststoff eine optimale Verformbarkeit und Flexibilität und der andere Kunststoff eine optimale Härte aufweist. Das ist ein vielfältig formbarer und in seiner äußeren und inneren Gestalt gestaltbarer Strang, der verschiedensten Zwecken dienen kann. Bei diesem wechseln die verformbaren und die unverformbaren in Längsrichtung des Stranges liegenden Teile miteinander ab. Dieser Profilstrang wird im Extrusionsverfahren dadurch hergestellt, dass zwei Extruder in den das Profil des Stranges formenden gemeinsamen Kopf dieser Extruder einspeisen und ihr Extrudat abwechselnd zeitlich nacheinander dem Mundstück dieses Extrusionskopfes zugeführt wird, wodurch der Profilstrang entsteht, in dem die flexiblen weichen Tolle jeweils zwischen zwei unflexlblen harten Teilen angeordnet sind.

## Beschreibung

Die Erfindung betrifft ein strangförmiges flexibles Profil, das Im Extrusionsverfahren aus mindestens zwei verschiedenen extrudierbaren Kunststoffen hergestellt ist sowie ein Verfahren zur Herstellung eines solchen Profils.

Bekannt Ist es, Stränge aus zwei oder mehr Kunststoffextrudaten derart herzustellen, dass die Kunststoffextrudate in Achsrichtung gesehen parallel nebeneinander liegen und sich an der Berührungsfläche miteinander zu einem Strang verbinden. Solche Stränge sind nur insoweit flexibel biegsam, als der aus dem untlaxlbleren Kunststoff gefertigte Strang biegsam ist.

Für die Herstellung eines flexiblen Bewehrungsstranges einer bei Fahrzeugen einzubauenden Dichtung ist es aus der EP 1 396 331 A1 bekannt, zwei unterschiedliche Kunststoffextrudate abwechselnd im Strang hintereinander anzuordnen, also in Längsrichtung des Stranges gesehen quer zu dieser Längsrichtung. Dieser flexible Bewehrungsstrang ist in dem Profil der Dichtung eingebettet, er trägt das die Dichtung bildende weitere Kunststoffextrudat. Die Flexibilität dieses Stranges ist durch die Flexibilität des flexibleren Kunststoffes bestimmt. Bei diesem Strang benutzt man die unflexibleren Teile des Stranges als mit Abstand hintereinander angeordnete, der Befestigung des Stranges dienende Klemmkörper.

Die GB 23 27 699 A beschreibt einen Dichtungsstreifen mit einem Befestigungsteil, der ein nachgebendes Verstärkungsmittel beinhaltet. Durch die EP 11 53 799 A1 ist auch ein Formkörper bekannt, der aus zwei Formteilen aus Kunststoff besteht.

In der Technik gibt es vielfach die Forderung, strangförmige Gegenstände druck- und verformungsfest zu gestalten, aber doch die Möglichkeit zu haben, sie flexibel biegen zu können. Das sind Eigenschaften, die einander widersprechen, Daher sind bei solchen Gegenständen Kompromisse einzugehen. Will man einen Hochdruckschlauch z.B. in engen Kurven verlegen können und außerdem gegen von außen wirkende Kräfte verformungsfest machen, so muss man mit dem Einbau von Einlagen und Bewehrungen ein flexibles Kunststoffmaterial daran zu hindern versuchen, unter innerem Druck zu bersten und unter äußeren Druck zusammengequetscht zu werden. Das erfordert bei der Herstellung einen hohen Aufwand an Material und Arbeit.

Die Erfindung vermeidet die Nachteile des Standes der Technik. Es ist die Aufgabe der Erfindung, strangförmige durch Kunststoffextrusion herzustellende Gegenstände druck- und verformungsfest und doch auch flexibel zu gestalten. Weiterhin ist es Aufgabe der Erfindung, ein Verfahren zu seiner Herstellung zu schaffen.

Die Erfindung löst die erstgenannte Aufgabe dadurch, dass das strangförmige Profil aus zwei verschiedenen Kunststoffen aufgebaut ist, die In Längsrichtung des Stranges wechseind hintereinander angeordnet sind und von denen der eine Kunststoff eine optimale Verformbarkeit und Flexibilität und der andere Kunststoff eine optimale Härte aufweist.

Das ist ein vielfältig formbarer und in seiner äußeren und inneren Gestalt gestaltbarer Strang, der verschiedensten Zwecken dienen kann. Bei diesem wechseln die verformbaren und die unverformbaren in Längsrichtung des Stranges liegenden Teile miteinander ab. Dieser Profilstrang wird im Extrusionsverfahren dadurch hergestellt, dass zwei Extruder in den das Profil des Stranges formenden gemeinsamen Kopf dieser Extruder einspeisen und ihr Extrudat abwechselnd zeitlich nacheinander dem Mundstück dieses Extrusionskopfes zugeführt wird, wodurch der Profilstrang entsteht, in dem die flexiblen weichen Teile jeweils zwischen zwei unflexiblen harten Teilen angeordnet sind.

Dieses strangförmige Profil kann die Form einer Leiste haben, kann geradlinig verlaufen oder unmittelbar nach der Extrusion in Kurvenform gelegt sein, es kann die Form eines Schlauches haben oder auch die Form einer Umhüllung.

So kann das Profil die Form einer Umhüllung eines strangförmigen oder schlauchförmigen Gegenstandes haben. Das Profil kann die Umhüllung eines Schlauches sein, der durch äußeren Druck nicht zusammengequetscht werden darf. Das Profil kann einen Hochdruckschlauch umhüllen, der dann nicht mehr so hohe Anforderungen an seine Druckfestigkeit zu haben braucht, well die Druckfestigkeit weitgehend durch die harten Teile der Umhüllung gegeben ist. Weiterhin kann das Profil eine Kabelumhüllung sein, die ein zentral im Kabel liegendes verdrllltes Leiterbündel vor radialer Verschiebung durch äußeren Druck auf das Kabel schützt.

Bei diesem Profil können die Längen der hintereinander im Strang angeordneten Kunststoffteile gleich lang sein, sie können aber auch ungleich lang sein. Man wird längere feste Teile zur Anwendung bringen, wenn man den Profilstrang in größeren Radien zu verlegen hat, man wird längere flexible Teile für die Verlegung in engeren Radien anwenden.

Der Profilstrang kann einen zu seiner einen Seite abgehenden Steg für die Klemmung des Profilstranges in einer Nut aufweisen. Der Profilstrang kann aber auch zwei zu einer Profilseite abgehende Stege für das Aufklemmen des Profilstranges auf eine Kante eines Vorsprunges aufweisen.

Der Profilstrang kann auch so gestaltet sein, dass die dem Steg oder den Stegen abgekehrte Seite des Profilstranges Träger einer weiteren Kunststoffschicht oder einer Furnierschicht ist, wie man sie z.B. in der Möbelindustrie zur Herstellung von Kanten an Möbeln benutzt.

Wird der Profilstrang für das An- oder Aufstecken an oder auf einen Gegenstand benutzt, so kann es vorteilhaft sein, dass mindestens die eine Seite des Steges im Bereich der härteren Kunststoffelemente mit als Klemmelement dienenden Vorsprüngen besetzt ist.

Der mit einem oder mehreren Stegen versehene Profilstrang kann zweckmäßigerweise so gestaltet sein, dass der Profilteil, an dem die Stege angebracht sind, hohl ist und rechteckigen oder runden Querschnitt aufweist.

Aus der Vielzahl der möglichen Anwendungsmöglichkeiten sei die noch erwähnt, bei der in dem Profilteil, an dem der oder die Stege angebracht sind, elektrische Leiter untergebracht sind.

Die Erfindung löst die zweitgenannte Aufgabe durch ein Verfahren zur Herstellung eines strangförmigen flexiblen Profiles im Extrusionsverfahren aus mindestens zwei verschiedenen extrudierbaren Kunststoffen, wobei das strangförmige Profil aus zwei verschiedenen Kunststoffen hergestellt wird, die in Längsrichtung des Stranges wechselnd hintereinander angeordnet werden und von denen der eine Kunststoff eine optimale Verformbarkeit und Flexibilität und der andere Kunststoff eine optimale Härte aufweist. Dabei wird das Profil insbesondere aus einem Spritzkopf mit zwei Extrudern mit nachgeschalteter Intermissionsvorrichtung in fortlaufender Folge hinter einander extrudiert.

Das Wesen der Erfindung ist nachstehend anhand von in der Zeichnung schematisch dargestellten Ausführungsbeispielen näher erläutert. Es zeigen:
- Fig. 1: einen Querschnitt durch eine in eine Nut einzusetzendes Profil als Abdeckleiste.
- Fig. 2: eine Seitenansicht dieses Profils in gerade gestrecktem Zustand.

- Fig. 3: eine Seitenansicht dieses Profils in gekrümmtem Zustand.
- Fig. 4: einen Querschnitt durch ein Profil, dessen Abdeckleiste mit Abkantungen versehen Ist.
- Fig. 5: einen Querschnitt durch ein Profil, in dessen Abdeckleiste elektrische Leiter eingebettet sind.
- Fig. 6: einen Querschnitt durch ein Profil, in dessen Abdeckleiste ein Hohlraum befindlich ist.
- Fig. 7: einen Querschnitt durch ein Profil, das mit zwei endseitig mit Haken versehenen Enden eine Kante eines Gegenstandes umfasst.
- Fig. 8: eine Seitenansicht eines rohrartigen Profils.
- Flg. 9: eine perspektivische Ansicht des rohrartigen Profils.

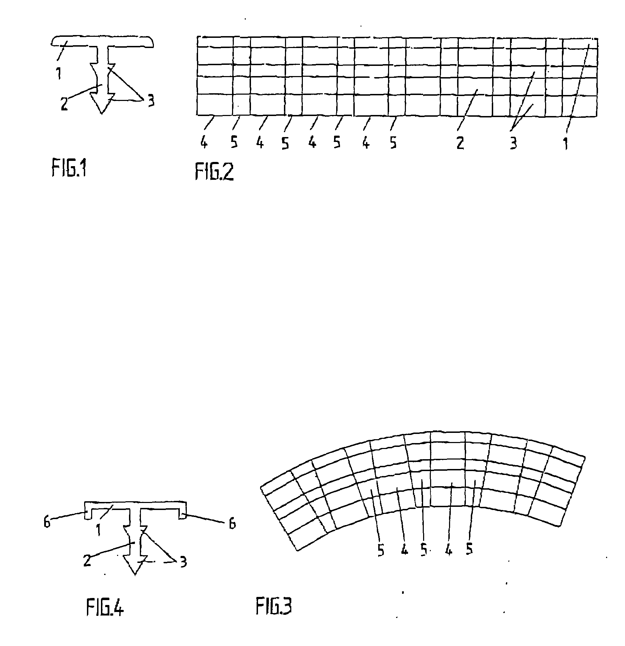

Der in Fig. 1 dargestellte Querschnitt durch eine in eine Nut einzusetzende Abdeckleiste zeigt die eigentliche Abdeckleiste 1, die auf ihrer Rückseite einen Steg 2 trägt, der mit Klemmelementen 3 besetzt ist. Dieses Profil besteht aus einer Vielzahl hintereinander angeordneter, als Kunststoffelemente ausgeführte Elemente 4 und 5, von denen das eine Element 5 aus einem Kunststoff optimaler Härte mit noch elastischer Verformbarkeit hergestellt ist und somit optimale Eigenschaften als Klemmelement aufweist.

Fig. 2 zeigt eine Seitenansicht dieses Profils in gestrecktem Zustand, wie es aus dem Spritzkopf zweier Extruder mit nachgeschalteter Intermissionsvorrichtung extrudiert wird. Aus diesem Spritzkopf werden die Elemente 4, 5 aus den beiden Kunststoffen in fortlaufender Folge hintereinander angeordnet extrudiert.

Fig. 3 zeigt eine Seitenansicht dieses Profiles in gekrümmtem Zustand. Es ist ersichtlich, dass die Elemente 4 aus hartem Kunststoff in ihrer Form unverändert bleiben, während die Elemente 5 aus weichem Kunststoff deformiert werden, wenn das Profil gebogen wird.

Fig. 4 zeigt einen Querschnitt durch ein anderes Profil, deren Abdeckleiste 1, die auf Ihrer Rückseite den Steg 2 trägt, der mit den Klemmelementen 3 besetzt ist, auf beiden Endkanten der Abdeckleiste 1 mit Abkantungen 6 versehen ist, die dem Übergreifen über die untere und obere Oberfläche einer Platte dienen.

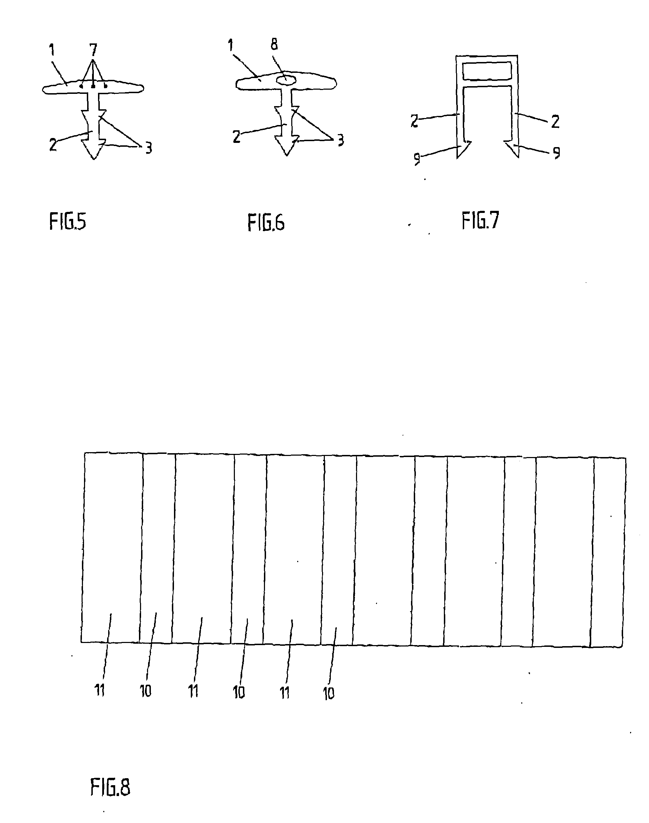

Fig. 5 zeigt einen Querschnitt durch ein Profil, in dessen Abdeckleiste 1 elektrische Leiter 7 eingebettet ist, Dieses Profil ist somit gleichzeitig ein Stegleiter, indem Steg 2 mit den Klemmelementen 3 besetzt ist.

Fig, 6 zeigt einen Querschnitt durch ein Profil, in dessen Abdeckleiste 1 ein Hohlraum 8 befindlich ist, der zum nachträglichen Einziehen eines Kabels oder dergleichen dienen kann. Dieses Profil ist ebenfalls mittels der an dem Steg 2 angeordneten Klemmelemente 3 mit einer Klemmfunktion ausgestattet.

Fig. 7 zeigt ein Profil, das mit zwei Stegen 2, an deren Enden aufeinander zu gerichtete Haken 9 angeformt sind, einen Gegenstand umfassen kann.

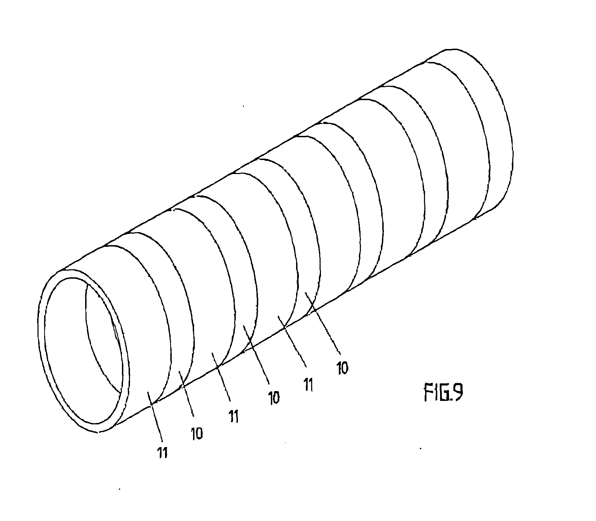

Das rohrartige Profil der Fig. 8 und 9 besteht aus einer Vielzahl von Ringen zweier Kunststoffsorten, von denen die eine Sorte 10 aus einem Kunststoff, der optimale Flexibilität und Weichheit aufweist, während die andere Sorte 11 aus einem anderen Kunststoff besteht, der eine optimale Härte mit noch elastischer Verformbarkeit aufweist. Diese beiden Kunststoffe werden abwechselnd nacheinander einem gemeinsamen Spritzkopf zugeführt, aus dem sie als zusammenhängender Strang extrudiert werden, so dass der erzeugte Strang aus in Längsrichtung des Stranges wechselnd hintereinander angeordneten, an den Stimselten zusammenhängenden Ringen besteht, von denen die Ringe 10 für die Flexibilität und die Ringe 11 für die Radialstabilifiät sorgen.

## Patentansprüche

1. Strangförmiges flexibles Profil, das im Extrusionsverfahren aus mindestens zwei verschiedenen extrudierbaren Kunststoffen hergestellt ist, **dadurch gekennzeichnet dass** das strangförmige Profil aus zwei verschiedenen Kunststoffen aufgebaut ist, die in Längsrichtung des Stranges wechselnd hintereinander angeordnet sind und von denen der eine Kunststoff eine optimale Verformbarkeit und Flexibilität und der andere Kunststoff eine optimale Härte aufweist.

2. Profil nach Anspruch 1, **dadurch gekennzeichnet, dass** das Profil Klemmelgertschaften besitzt.

3. Profil nach Anspruch 1 oder 2, **dadurch gekennzeichnet, dass** das Profil über den Umfang ringförmig geschlossen ist.

4. Profil nach zumindest einem der vorhergehenden Ansprüche, **dadurch gekennzeichnet, dass** der eine Kunststoff eine optimale Flexibilität und Weichheit.

5. Profil nach zumindest einem der vorhergehenden Ansprüche, **dadurch gekennzeichnet, dass** der andere Kunststoff eine optimale Härte mit noch elastischer Verformbarkeit aufweist.

6. Profil nach zumindest einem der vorhergehenden Ansprüche, **dadurch gekennzeichnet, dass** das Profil die Form einer Leiste hat.

7. Profil nach zumindest einem der vorhergehenden Ansprüche, **dadurch gekennzeichnet, dass** das Profil die Form eines Schlauches hat.

8. Profil nach zumindest einem der vorhergehenden Ansprüche, **dadurch gekennzeichnet, dass** das Profil die Form einer Umhüllung eines strangförmigen oder schlauchförmigen Gegenstandes hat.

9. Profil nach zumindest einem der vorhergehenden Ansprüche, **dadurch gekennzeichnet, dass** das Profil eine Schlauch- oder Kabelumhüllung ist.

10. Profil nach zumindest einem der vorhergehenden Ansprüche, **dadurch gekennzeichnet, dass** die Längen der hintereinander im Strang angeordneten Kunststoffteile gleich lang sind.

11. Profil nach zumindest einem der vorhergehenden Ansprüche, **dadurch gekennzeichnet, dass** die Kunststoffteile vorzugsweise Längen von ca. 1 cm aufweisen.

12. Profil nach zumindest einem der vorhergehenden Ansprüche, **dadurch gekennzeichnet, dass** die Längen der hintereinander im Strang angeordneten Kunststoffteile ungleich lang sind, wobei vorzugsweise die harten Kunststoffteile länger als die weichen sind.

13. Profil nach zumindest einem der vorhergehenden Ansprüche, **dadurch gekennzeichnet, dass** das Profil einen zu seiner einen Seite abgehenden Steg für die Klemmung des Profils in einer Nut aufweist.

14. Profil nach zumindest einem der vorhergehenden Ansprüche, **dadurch gekennzeichnet, dass** das Profil zwei zu einer Profilseite abgehende Stege für das Aufklemmen des Profils auf eine Kante eines Vorsprunges aufweist.

15. Profil nach Anspruch 13 oder 14, **dadurch gekennzeichnet, dass** die dem Steg oder den Stegen abgekehrte Seite des Profils Träger einer weiteren Kunststoffschicht oder einer Furnierschicht ist.

16. Profil nach Anspruch 13 oder 14, **dadurch gekennzeichnet, dass** mindestens die eine Seite des Steges im Bereich der härteren Kunststoffelemente mit als Klemmelement dienenden Vorsprüngen besetzt ist.

17. Profil nach Anspruch 14, **dadurch gekennzeichnet, dass** der Profilteil, an dem die Stege angebracht sind, hohl ist und rechteckigen oder runden Querschnitt aufweist.

18. Profil nach Anspruch 16, **dadurch gekennzeichnet, dass** die Stege mit Widerhaken ausgestattet und insbesondere nach dem Prinzip eines Dübels aufgebaut sind.

19. Profil nach zumindest einem der vorhergehenden Ansprüche, **dadurch gekennzeichnet, dass** das Profil einen Hohlraum insbesondere zum nachträglichen Einziehen eines Kabels oder dergleichen aufweist.

20. Profil nach zumindest einem der vorhergehenden Ansprüche, **dadurch gekennzeichnet, dass** das Profil zur Aufnahme elektrischer Leiter ausgeführt ist.

21. Profil nach Anspruch 20, **dadurch gekennzeichnet, dass** die elektrischen Leiter in einem die Stege verbindenden Profllteil untergebracht sind.

22. Verfahren zur Herstellung eines strangförmiges flexibles Profil nach zumindest einem der vorhergehenden Ansprüche im Extrusionsverfahren aus mindestens zwei verschiedenen extrudierbaren Kunststoffen, **dadurch gekennzeichnet dass** das strangförmige Profil aus zwei verschiedenen Kunststoffen hergestellt wird, die In Längsrichtung des Stranges wechselnd hintereinander angeordnet werden und von denen der eine Kunststoff eine optimale Verformbarkeit und Flexibilität und der andere Kunststoff eine optimale Härte aufweist.

23. Verfahren nach Anspruch 22 **dadurch gekennzeichnet, dass** das Profil aus einem Spritzkopf mit zwei Extrudern mit nachgeschalteter Intermissionsvorrichtung extrudiert wird.

24. Verfahren nach Anspruch 22 oder 23 **dadurch gekennzeichnet, dass** die beiden Kunststoffe in fortlaufender Folge hintereinander extrudiert werden.
